# EUROPÄISCHE PATENTANMELDUNG

(11) **EP 4 328 664 A1**
(43) Veröffentlichungstag der Anmeldung: **28.02.2024**
(21) Anmeldenummer: 22192243.8
(22) Anmeldetag: 25.08.2022
(51) Int. Cl.: G02F 1/1335, G02F 1/1347

(54) **VERFAHREN UND VORRICHTUNG ZUR OPTIONALEN WIEDERGABE EINES SPIEGELBILDES ODER EINER BILDLICHEN DARSTELLUNG**

(71) Anmelder: Heimburg, Jan, 04509 Delitzsch (DE)
(72) Erfinder: Heimburg, Jan, 04509 Delitzsch (DE)
(74) Vertreter: Beyer, Wolfgang

(57) **Zusammenfassung**

Die Erfindung betrifft ein Verfahren und eine zur Durchführung des Verfahrens dienende multifunktionale Spiegel- /Bildwiedergabevorrichtung, die mehrere optional auswählbare unterschiedliche Funktionen aufweist. Insbesondere dient die Vorrichtung zur wahlweisen Nutzung als Spiegel- oder Bildwiedergabeeinrichtung, deren jeweilige auszuübende Funktion gesteuert herbeigeführt werden kann.

Aufgabe der Erfindung ist die Schaffung eines Verfahrens und einer multifunktionalen Spiegel- und/oder Bildwiedergabevorrichtung, mittels der optionale vollflächige Umschaltungen der Spiegelfunktion in eine Wiedergabefunktion von Bilddarstellungen, Viideosequenzen und Informationsdarstellungen sowie umgekehrt ermöglicht werden.

Gelöst wird die Aufgabe, indem die optionale Wiedergabe des Spiegelbildes dadurch erfolgt, dass das auf die Wiedergabevorrichtung einfallende Licht durch als Eintrittsfläche der Wiedergabevorrichtung dienende Trägermaterialien geführt wird, die für Licht teilweise durchlässig sind und auf ihrer Lichteintrittsfläche spiegelnde Eigenschaften aufweisen, anschließend das teilweise durch die Trägermaterialien durchgelassene Licht von den Trägermaterialien nachgeordneten Polarisationsfiltern wiederum teilweise absorbiert wird, danach das durch die Polarisationsfilter teilweise durchgelassene Licht durch die den Polarisationsfiltern nachgeordnete transparente Bildaufnahmen, Videosequenzen oder Informationen wiedergebende Trägermaterialien geleitet wird und dass das aus den transparenten Trägermaterialien austretende Licht an Oberflächen von nachgeordneten lichtemittierenden Baugruppen in deren ausgeschaltetem Zustand reflektiert wird und zu den Polarisationsfiltern rückgeleitet und von diesen absorbiert wird sowie die optionale Wiedergabe der Bildaufnahmen, Videosequenzen oder Informationen durch die Zuschaltung der lichtemittierenden Baugruppen erfolgt, mittels derer emittiertes Licht in Richtung der die Spiegelfläche bildenden Trägermaterialien durch die transparenten Trägermaterialien geleitet wird und aufgrund der Lichtemission nach der Durchquerung der Polarisationsfilter mit einem Vielfachen der Lichtenergie des einfallenden Lichtes durch die die Bildaufnahmen, Videosequenzen oder Informationen aufweisenden transparenten Trägermaterialien zur Wiedergabe auf die die Spiegelfläche aufweisenden Trägermaterialien geführt wird.

## Beschreibung

Die Erfindung betrifft ein Verfahren und eine zur Durchführung des Verfahrens dienende multifunktionale Spiegel- /Bildwiedergabevorrichtung, die mehrere optional auswählbare unterschiedliche Funktionen aufweist. Insbesondere dient die Vorrichtung zur wahlweisen Nutzung als Spiegel- oder Bildwiedergabeeinrichtung, deren jeweilige auszuübende Funktion gesteuert herbeigeführt werden kann. Darüber hinaus ist die Vorrichtung in Verbindung mit weiteren Vorrichtungen gleicher Funktionalitäten zur gesteuerten Erzeugung flächenhafter oder räumlicher zwei-. oder dreidimensionaler Spiegel- und/oder Bildeffekte nutzbar.

Bekannt sind aus dem Stand der Technik Vorrichtungen, die zur Anzeige von Daten und ebenso zur Ausübung einer Spiegelfunktion geeignet sind. So wird in der EP 3 299 880 A1 eine Anzeigevorrichtung beschrieben, die in der Lage ist, eine Informationsanzeigefunktion und eine Spiegelfunktion auszuführen. Dabei dient die Anzeigevorrichtung zur Anzeige eines vorbestimmten Objekts in einem ausgeschalteten Zustand. Dazu weist die in der Schrift vorgestellte Anzeigevorrichtung Trennwände auf, die im Raum zwischen den Elektroden einer cholesterischen Flüssigkristallanzeige (LCD) angeordnet sind. Zudem wird die Anzeigevorrichtung vorzugsweise als eine transparente Anzeigevorrichtung mit verbesserter Sichtbarkeit unter Verwendung cholesterischer Flüssigkristalle ausgebildet. Die in der Schrift offenbarte Anzeigevorrichtung umfasst eine reflektierende Schicht und eine Flüssigkristallschicht, die vor der reflektierenden Schicht angeordnet und so konfiguriert ist, dass sie zwischen einem transmissiven Modus für die Übertragung von Außenlicht, einem Anzeigemodus zur Reflexion von Außenlicht zur Anzeige eines Objekts und einem transflektiven Modus zum Übertragen von Außenlicht und zum Reflektieren von Außenlicht in einem vorbestimmten Bereich umgewandelt wird. Die beschriebene Anordnung von Flüssigkristallen mit Trennwänden kommt vorzugsweise in Computern und mobilen Endgeräten zur Anwendung. Derartige Flüssigkristallanzeigen sind jedoch für großflächige Anwendungen mit optionalen Spiegel- und Bildwiedergabefunktionen ungeeignet.

Weiterhin bekannt ist nach der DE 11 2019 000 373 T5 ein umschaltbarer Einwegspiegel, der in zwei Bereiche unterteilt ist und eine umschaltbare elektrooptische Schicht aufweist, die dem zweiten Bereich zugewandt ist. Diese Vorrichtung ist derart konfiguriert, dass sie zwischen einem durchlässigen Zustand und einem oder mehreren undurchlässigen Zuständen umgeschaltet werden kann. Weiterhin weist die Vorrichtung einen Teilreflektor auf, der in oder neben der umschaltbaren elektrooptischen Schicht integriert ist. Dieser Teilreflektor ist dem ersten Bereich zugewandt und derart konfiguriert, dass er Licht nur teilweise reflektiert. Dadurch überträgt der umschaltbare Einwegspiegel teilweise Licht, das vom ersten Bereich zum zweiten Bereich geht, und ein zweiter Teil des Lichtes vom zweiten Bereich zum ersten Bereich übertragen wird. Wenn sich die umschaltbare elektrooptische Schicht in einem undurchlässigen Zustand befindet, wird die Lichttransmission durch die Vorrichtung hindurch verringert, wodurch das Verhältnis zwischen der Transmission des Lichts zum ersten Bereich und der Reflexion des Lichts durch den Teilreflektor verringert wird, was zu einer verringerten Sicht des zweiten Bereichs durch einen Betrachter im ersten Bereich führt. Bei dieser Lösung wird eine umschaltbare Folie zur Verringerung der Lichttransmission genutzt. Der Zweck des Einsatzes dieser Vorrichtung besteht darin, das Fenster eines Raumes (z.B. Klassenzimmer) als Einwegspiegel wirken zu lassen, der es für eine Person (z.B. einen aktiven Schützen) schwierig macht, das Innere des Klassenzimmers zu sehen. Für die Nutzung als kombinierte zwei- oder dreidimensionale Spiegel-/Bildwiedergabevorrichtung ist jedoch diese Lösung ebenfalls nicht geeignet.

Nach der DE 11 2019 004 079 T5 wird eine Anzeigevorrichtung und eine Spiegelvorrichtung vorgestellt, mittels der verhindert wird, dass ein vorhandenes Reflexionsvermögen in einen ungewollten Reflexionszustand absinkt, und mittels der ein nahegelegenes Objekt detektiert werden kann. Dazu umfasst die Anzeigevorrichtung ein Anzeigefeld und ein Feld in der vorderen Oberfläche, das mit dem Anzeigefeld überlagert ist und das zwischen einem Reflexionszustand, in dem einfallendes Licht reflektiert wird, und einem Durchlasszustand, in dem einfallendes Licht durchgelassen wird, umgeschaltet wird. Das Feld der vorderen Oberfläche kann dabei die Anwesenheit eines Objekts detektieren. Eine Umschaltung von einem Zustand, in dem vollständig die bestehende Reflexion verhindert wird, in einen Zustand, bei dem keine Reflexion stattfindet, ist nicht vorgesehen. Durch die Überlagerung des Anzeigefeldes mit dem in der vorderen Oberfläche zur Erfassung eines Objektes vorgesehenen Feldes kann jedoch keine jeweils separate optionale Nutzung als Bildwiedergabe- oder Spiegelvorrichtung stattfinden.

Die Aufgabe der Erfindung besteht deshalb in der Schaffung eines Verfahrens und einer für die Durchführung des Verfahrens dienenden multifunktionalen Spiegel- und/oder Bildwiedergabevorrichtung, mittels der eine optionale vollflächige Umschaltung der Spiegelfunktion in eine Wiedergabefunktion von Bilddarstellungen, Viideosequenzen und Informationsdarstellungen sowie umgekehrt ermöglicht wird. Weiterhin soll die Vorrichtung in Verbindung mit weiteren gleichgestalteten Vorrichtungen unter Anwendung des Verfahrens für eine gesteuerte umschaltbare Erzeugung zweidimensionaler oder räumlicher Spiegel- und/oder Bildwiedergabeeffekte geeignet sein. Das zu schaffende Verfahren und die dafür einsetzbare Vorrichtung sollen dabei multifunktional nutzbar sein und einen geringen Aufwand an technischen Mitteln erfordern.

Gelöst wird diese Aufgabe dadurch, indem für eine optionale Wiedergabe des Spiegelbildes in einem ersten Verfahrensschritt das auf die Wiedergabevorrichtung einfallende Licht durch als Eintrittsfläche der Wiedergabevorrichtung dienende Trägermaterialien geführt wird, die für Licht teilweise durchlässig sind und auf ihrer Lichteintrittsfläche spiegelnde Eigenschaften aufweisen. Anschließend wird das teilweise durch die Trägermaterialien durchgelassene Licht von den Trägermaterialien nachgeordneten Polarisationsfiltern wiederum teilweise absorbiert. In einem folgenden Verfahrensschritt wird dann das durch die Polarisationsfilter teilweise durchgelassene Licht durch die den Polarisationsfiltern nachgeordnete transparente Bildaufnahmen, Videosequenzen oder Informationen wiedergebende Trägermaterialien geleitet. Das aus den transparenten Trägermaterialien austretende Licht wird danach an Oberflächen nachgeordneter lichtemittierenden Baugruppen in deren ausgeschalteten Zuständen reflektiert und zu den Polarisationsfiltern rückgeleitet sowie von diesen absorbiert.

Die zweite optionale Wiedergabe der Bildaufnahmen, Videosequenzen oder Informationen erfolgt durch die Zuschaltung der lichtemittierenden Baugruppen, mittels derer das emittierte Licht in Richtung der die Spiegelfläche bildenden Trägermaterialien durch die transparenten Trägermaterialien geleitet wird und das durch die Lichtemission erzeugte Licht mit einem Vielfachen der Lichtenergie des einfallenden Lichtes nach der Durchquerung der Polarisationsfilter durch die die Bildaufnahmen, Videosequenzen oder Informationen aufweisenden transparenten Trägermaterialien zur Wiedergabe auf die die Spiegelfläche aufweisenden Trägermaterialien geführt wird.

Für die Erzeugung von dreidimensionalen Bilddarstellungen auf der Oberfläche des Eingangsteiles der Wiedergabebaugruppe wird das von den zugeschalteten lichtemittierenden Baugruppen erzeugte Licht durch mehrfach hintereinander angeordnete dreidimensionale Effekte erzeugende transparente Teilbilder geleitet, die auf den Trägermaterialien aufgebracht werden.

Effizient wird eine Wiedergabe von Videosequenzen auf der Oberfläche des Eingangsteils der Wiedergabebaugruppe erreicht, indem das durch Zuschaltung der lichtemittierenden Baugruppen erzeugte Licht durch die transparente Trägermaterialien geleitet wird, während eine Steuerung der jeweiligen Transparenz der Trägermaterialien entsprechend den jeweiligen Videobildern vorgenommen wird.

Vorteilhaft werden ebenso variable Informationsdarstellungen auf der Oberfläche des Eingangsteils der Wiedergabebaugruppe erzielt, wenn das von den lichtemittierenden Baugruppen erzeugte Licht durch die transparenten Trägermaterialien geleitet wird, deren jeweilige erforderlichen transparenten Eigenschaften gesteuert den wiederzugebenden Informationsdarstellungen angepasst wird.

Eine multifunktionale Anwendung der erfindungsgemäßen Lösung bei einer gleichzeitigen Senkung des erforderlichen Aufwandes an technischen Mitteln für die Herstellung einer dazu erforderlichen Vorrichtung wird effektvoll erreicht, indem vorzugsweise die für die Durchführung des Verfahrens dienende Vorrichtung wie nachstehend gestaltet wird.

Bei dieser Vorrichtung weist die das einfallende Licht aufnehmende Eintrittsfläche der Wiedergabevorrichtung Trägermaterialien auf, die das Licht teilweise durchlassen und auf der dem einfallenden Licht zugewandten Seite spiegelnde Eigenschaften aufweisen, Innerhalb der Wiedergabevorrichtung sind den Trägermaterialien Polarisationsfilter nachgeordnet, die das zu diesen gelangende Licht teilweise absorbieren. Den Polarisationsfiltern sind wiederum transparente Trägermaterialien nachgeordnet, die zur Aufnahme und Wiedergabe von Bilddarstellungen, Videosequenzen oder Informationen dienen. Nachfolgend sind diesen Trägermaterialien zu- und abschaltbare lichtemittierende Baugruppen zugeordnet, die ein Vielfaches der Lichtenergie des einfallenden Lichtes erzeugen und innerhalb der Wiedergabevorrichtung zur rückwärtsgewandten Lichtführung in Richtung der Eintrittsfläche der Wiedergabevorrichtung dienen.

Eine variable Anwendungsbreite der Vorrichtung wird effektvoll erreicht, indem den die teilweise Absorption vornehmenden Polarisationsfiltern, den die Bildaufnahmen, Videosequenzen und Informationen wiedergebenden Trägermaterialien sowie den lichtemittierenden Baugruppen eine Steuereinrichtung zugeordnet wird.

Für optionale Wiedergaben von dreidimensionalen Darstellungen ist es von Vorteil, wenn mindestens zwei die jeweiligen Teilbilder der die dreidimensionalen Darstellungen wiedergebenden Trägermaterialien in der Wiedergabevorrichtung hintereinander angeordnet sind.

Qualitativ hochwertige Wiedegaben werden effizient dadurch erzielt, wenn bei der optionalen Wiedergabe von Videosequenzen die Trägermaterialien als LED- oder LCD-Wiedergabebaugruppen ausgebildet sind.

Eine breite Anwendung der erfindungsgemäßen Lösung erweist sich durch die Einbeziehung von mindestens zwei der vorgeschlagenen Vorrichtungen und einer diesen Vorrichtungen zugeordneten Steuereinrichtung in ein System von flächenhaften und räumlichen Anordnungen der Vorrichtungen. Mittels kombinatorisch unterschiedlicher Verbindungen der Vorrichtungen unter Nutzung der jeweiligen optionalen Steuerungen eröffnet sich ein breites Anwendungsfeld für die optionalen Wiedergaben der Spiegelbilder, bildlicher Darstellungen, Videosequenzen und Informationsdarstellungen.

Eine optionale optische spiegelbildliche Wiedergabe eines durch Spiegeleffekte vergrößerten Raumes wird vorteilhaft erreicht, wenn die Anordnungen der Vorrichtungen mit ihren jeweiligen die Spiegelbilder und bildlichen Darstellungen wiedergebenden Trägermaterialien zugewandt auf gegenüberliegenden Flächen angeordnet sind und optional deren Funktionen von der Steuereinrichtung gesteuert werden.

Effizient für die Erreichung einfacher und ortsunabhängiger Steuerungen werden die Steuerungen der mit dem System zu erreichenden Funktionen so durchgeführt, dass die Steuervorgänge funktechnisch von mobilen Endgeräten aus durchgeführt werden.

Eine wirkungsvolle automatische Steuerung der jeweiligen anwendungsbezogenen Funktionen wird erzielt, wenn die Steuereinrichtung eine Zeitschaltfunktion aufweist, mit der die Zuschaltungen der lichtemittierenden Baugruppen der Vorrichtungen gesteuert werden.

Nachfolgend soll die Erfindung anhand eines Ausführungsbeispiels näher erläutert werden. In der auf das Ausführungsbeispiel bezogenen Zeichnung zeigt
- **Fig. 1:**: die schematische Explosionsdarstellung der Wiedergabevorrichtung mit Richtungsverlauf des einfallenden Lichts während der Spiegelfunktion,
- **Fig. 2:**: die schematische Explosionsdarstellung der Wiedergabevorrichtung mit Richtungsverlauf des emittierten Lichts während der Wiedergabefunktion,
- **Fig. 3:**: die schematische Anordnung der Baugruppen der Wiedergabevorrichtung mit Steuereinrichtung und mobilem Endgerät,
- **Fig. 4:**: den schematischen Aufbau der Wiedergabevorrichtung mit der Ausbildung der Baugruppen zur optionalen Wiedergabe von dreidimensionalen Bildern und
- **Fig. 5:**: die flächenhafte Anordnung mehrerer Wiedergabevorrichtungen zur Nutzung als Alarmanlage.

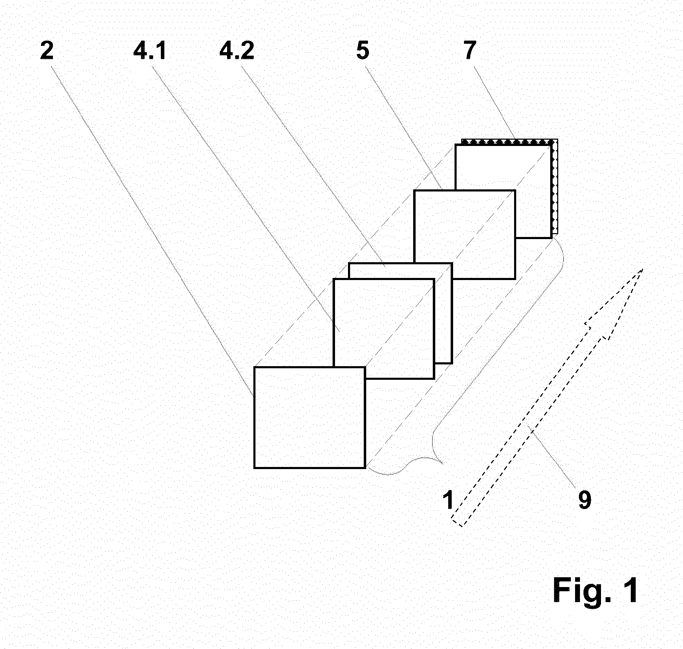

Die Explosionsdarstellung in Figur 1 zeigt die Anordnung der zur Wiedergabevorrichtung 1 zusammengefügten Baugruppen. Der Eingang der Wiedergabevorrichtung 1 ist als Spiegelfläche 2 ausgebildet, auf die das einfallende Licht auftrifft und von dieser reflektiert wird. Dabei ist das die Spiegelfläche bildende Trägermaterial für Licht teildurchlässig. Als Trägermaterialien kommen sogenannte Spiegelfolien zur Anwendung, die auf Glasplatten aufgebracht werden. Innerhalb der Wiedergabevorrichtung 1 sind den Trägermaterialien in Richtung des einfallenden Lichts gesehen nachfolgend je nach Anwendungsfall lineare Polarisationsfilter 4.1 und zirkulare Polarisationsfilter 4.2 eingebracht. Diesen Polarisationsfiltern 4.1 und 4.2 folgen dann transparente Trägermaterialien 5, auf denen jeweils die wiederzugenden Bilder, dreidimensionalen Darstellungen und textlichen Darstellungen aufgebracht sind. Als letzte Baugruppe in Richtung des einfallenden Lichts gesehen ist eine zuschaltbare lichtemittierende Baugruppe 7 angeordnet. Solange sich die lichtemittierende Baugruppe 7 im ausgeschalteten Zustand befindet, wird das teilweise zu dieser Baugruppe 7 gelangende Licht von deren Oberfläche reflektiert und wird nach dem Durchgang durch die transparenten Trägermaterialien von den Polarisationsfiltern absorbiert. Somit kann das restliche zu den die Spiegelfläche bildenden Trägermaterialen vom Beobachter nicht mehr wahrgenommen werden. Für den Betrachter erscheint lediglich sein Spiegelbild.

Sind die einzelnen Baugruppen zusammengefügt, kann die Wiedergabevorrichtung 1 jeweils für sich genommen als umschaltbare Spiegel/Bild Einrichtung genutzt werden. So kann diese z.B. als Wandbild ausgebildet sein, das in Badräumen, öffentlichen Einrichtungen (z.B. Toiletten und Aufenthaltsräumen) oder für eine alternative Nutzung als Spiegel oder Bild Anwendung finden. Wird die Wiedergabevorrichtung 1 nicht als Spiegel benutzt, so kann in dieser Zeit der Nichtnutzung des Spiegels die Wiedergabefunktion zugeschaltet und Werbedarstellungen (z.B. Bilder, Texte, Videos) wiedergegeben werden.

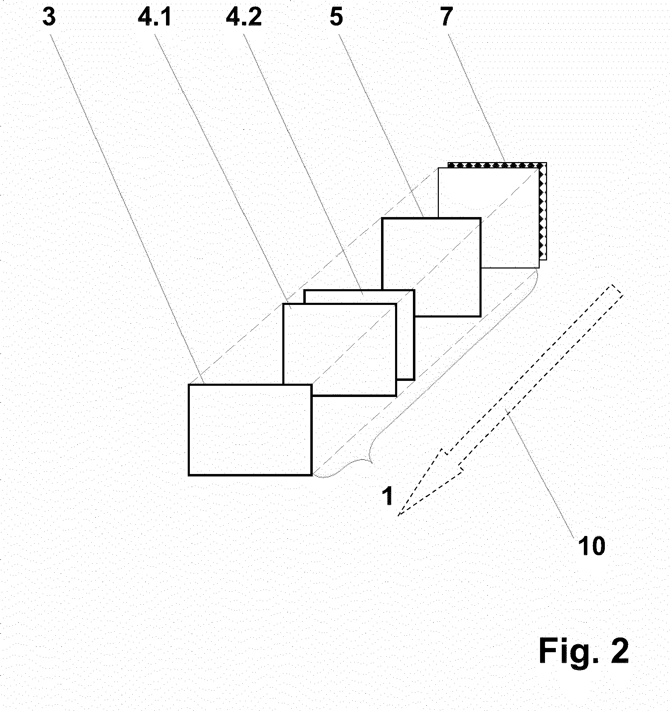

Mit der Figur 2 wird die Explosionsdarstellung der Wiedergabevorrichtung 1 mit der Lichtstromrichtung 10 bei einer bildlichen Wiedergabe dargestellt. Die Auslösung der Wiedergabefunktion erfolgt durch die Zuschaltung der lichtemittierenden Baugruppe 7. Das erzeugte Licht gelangt zu den transparenten Trägermaterialien 5, auf denen die Bild- oder textlichen Informationen aufgebracht sind. Die Lichtenergie des emittierten Lichtes beträgt dabei ein Vielfaches der Energie des einfallenden Lichtes. Das während des Lichtdurchganges mit Bild und/oder Textinformationen modulierte Licht gelangt danach zu den Polarisationsfiltern 4.1, 4.2 und wird von diesen je nach Anwendungsfall linear oder zirkular polarisiert. Nach der Polarisierung des modulierten Lichtes gelangt das Licht zur Bildfläche 3 und die Informationen werden durch diese nach außen wiedergegeben.

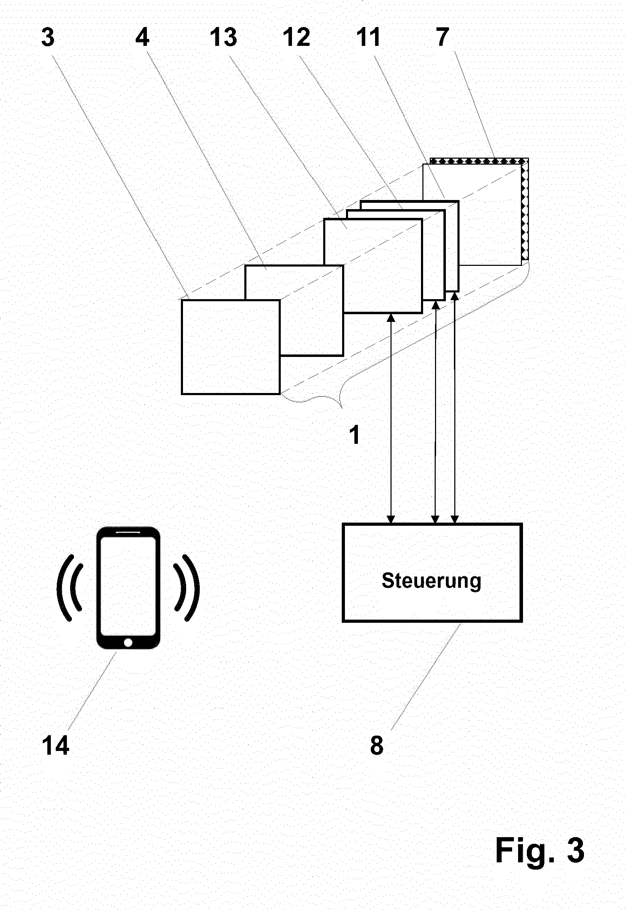

Die schematische Darstellung der Figur 3 zeigt die Baugruppen der Wiedergabevorrichtung 1 in Verbindung mit einer Steuereinrichtung 8. In dem gezeigten Ausführungsbeispiel ist die Steuereinrichtung 8 mit den transparenten Trägermaterialien 11, 12 und 13 verbunden und steuert die jeweils wiederzugebenden Bild- oder textlichen Informationen. Bei der Ausbildung der Trägermaterialien 11, 12 und 13 als LCD-Baugruppen wird mittels dieser LCD-Baugruppen linear polarisiertes Licht ausgesendet. Bei der gesteuerten Anlegung von elektrischen Spannungen durch die Steuereinrichtung 8 kann der Lichtdurchgang über die Höhe der Spannung stufenlos gesteuert werden. Je kleiner die angelegte Spannung wird, desto mehr Licht kann die Baugruppen passieren. Die Zuschaltung der lichtemittierenden Baugruppe 7 erfolgt ebenfalls über die Steuereinrichtung 8. Die Polarisationsfilter 4 dienen zur Filterung des auf die Bildfläche 3 auftreffenden Lichtes. Die Steuerfunktionen können neben der stationären Steuereinrichtung 8 optional auch mit einem mobilen Endgerät 14 durchgeführt werden. Die Auslösung und Übertragung der funktechnischen Steuersignale wird dabei unter Nutzung einer dafür geschaffenen App vorgenommen.

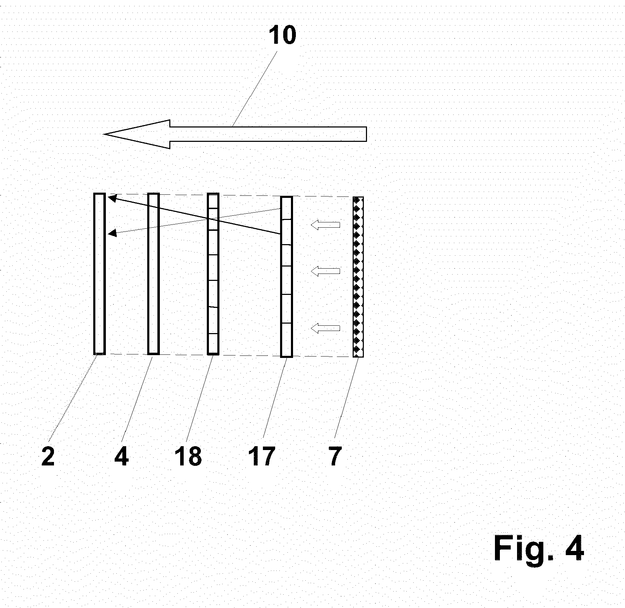

Die schematische Darstellung in Figur 4 zeigt den Aufbau der Wiedergabebaugruppe 1 für eine optionale dreidimensionale Wiedergabe einer bildlichen Darstellung. Dazu wird zwischen der lichtemittierenden Baugruppe 7 und der Spiegelfläche 2 ein Stereobildträger 17 und ein Betrachtungsraster 18 eingebracht. Ein derartiges Verfahren zur Erzeugung von 3-D-Bildern wird in der DD-PS 259 766 A3 beschrieben. Dieses für die Anwendung auf fotografischem Werbegebiet und in der Druckindustrie vorgesehene Verfahren verwendet gerasterte Teilbilder, die durch mechanische Kopierraster hergestellt und durch mechanische Betrachtungsraster von unterschiedlichen Betrachtungsorten aus betrachtet werden können. Die gerasterten Teilbilder werden dazu innerhalb des Kopiervorganges um eine Rasterbreite verschoben motivgleich nacheinander durch ein Kopierraster kopiert. Mit diesem Verfahren werden Verdunkelungseffekte und Pseudostereoeffekte bei der Nutzung von einfachen Kopier- bzw. Betrachtungsrastersysteme wie z.B. mechanische Schlitzrastersysteme verhindert. Bei der Anwendung dieses Verfahrens in der vorliegenden erfindungsgemäßen Lösung dient die steuerbare lichtemittierende Baugruppe 7 zur Beleuchtung des Stereobildträgers 17. Mittels des Polarisationsfilters 4 können durch die Polarisierung des auftreffenden Lichtes weitere optische Effekte erreicht werden.

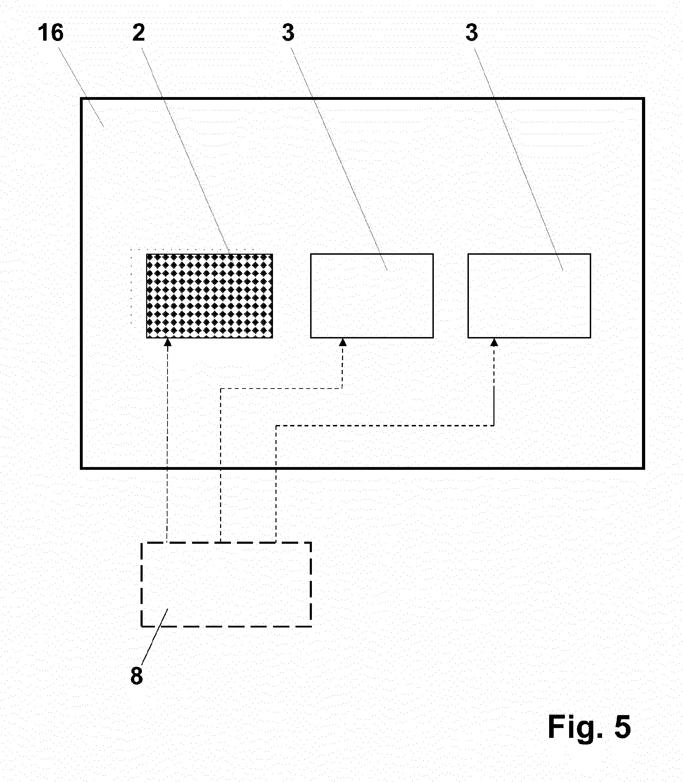

Eine beispielsweise Anwendung mit mehreren Wiedergabevorrichtungen 1 als Alarmanlage zeigt Figur 5. Dazu werden an einer Wandfläche 16 mehrere die Form eines Wandbildes aufweisende Wiedergabevorrichtungen 1 entlang des Wandverlaufes nacheinander angebracht. Mittels der Steuereinrichtung 8 erfolgt eine vorgegebene Ansteuerungsabfolge der Wiedergabevorrichtungen 1 als Spiegelfläche 2 oder als Bildfläche 3. Durch die dabei auftretenden wechselnden Spiegeleffekte und erzeugter Änderungen bildlicher Darstellungen bzw. Videosequenzen entstehen für z.B. einbrechende Personen abschreckende optische Täuschungen.

### Bezugszeichen

- 1: Wiedergabevorrichtung
- 2: Spiegelfläche
- 3: Bildfläche
- 4: Polarisationsfilter
4.1 linearer Polarisationsfilter
4.2 zirkularer Polarisationsfilter
- 5: transparentes Trägermaterial
- 6: spiegelndes Trägermaterial
- 7: lichtemittierende Baugruppe
- 8: Steuereinrichtung
- 9: Lichtstromrichtung bei Spiegelfunktion
- 10: Lichtstromrichtung bei Bildwiedergabe
- 11: erstes transparentes Trägermaterial
- 12: zweites transparentes Trägermaterial
- 13: n-tes transparentes Trägermaterial
- 14: mobiles Endgerät
- 15: LCD-Wiedergabebaugruppe
- 16: Wandfläche
- 17: Stereobildträger
- 18: Betrachtungsraster

## Patentansprüche

1. Verfahren zur optionalen Wiedergabe eines Spiegelbildes und/oder einer bildlichen Darstellung, **dadurch gekennzeichnet, dass**
a) die optionale Wiedergabe des Spiegelbildes dadurch erfolgt, indem das auf die Wiedergabevorrichtung (1) einfallende Licht durch als Eintrittsfläche der Wiedergabevorrichtung (1) dienende Trägermaterialien (5) geführt wird, die für Licht teilweise durchlässig sind und auf ihrer Lichteintrittsfläche spiegelnde Eigenschaften aufweisen,
b) anschließend das teilweise durch die Trägermaterialien (5) durchgelassene Licht von den Trägermaterialien (5) nachgeordneten Polarisationsfiltern (3) wiederum teilweise absorbiert wird,
c) danach das durch die Polarisationsfilter (3) teilweise durchgelassene Licht durch die den Polarisationsfiltern (3) nachgeordnete transparente Bildaufnahmen, Videosequenzen oder Informationen wiedergebende Trägermaterialien (4) geleitet wird und
d) dass das aus den transparenten Trägermaterialien (4) austretende Licht an Oberflächen von nachgeordneten lichtemittierenden Baugruppen (6) in deren ausgeschaltetem Zustand reflektiert wird und zu den Polarisationsfiltern (3) rückgeleitet und von diesen absorbiert wird sowie
e) die optionale Wiedergabe der Bildaufnahmen, Videosequenzen oder Informationen durch die Zuschaltung der lichtemittierenden Baugruppen (6) erfolgt, mittels derer emittiertes Licht in Richtung der die Spiegelfläche bildenden Trägermaterialien (5) durch die transparenten Trägermaterialien (4) geleitet wird und
f) aufgrund der Lichtemission nach der Durchquerung der Polarisationsfilter (3) mit einem Vielfachen der Lichtenergie des einfallenden Lichtes durch die die Bildaufnahmen, Videosequenzen oder Informationen aufweisenden transparenten Trägermaterialien (4) zur Wiedergabe auf die die Spiegelfläche aufweisenden Trägermaterialien (5) geführt wird.

2. Verfahren nach Patentanspruch 1, **dadurch gekennzeichnet, dass** das von den lichtemittierenden Baugruppen (6) erzeugte Licht zwecks Erzeugung dreidimensionaler Bilddarstellungen durch mehrfach hintereinander angeordnete dreidimensionale Effekte erzeugende transparente Teilbilder geleitet wird, die auf den Trägermaterialien (4) aufgebracht sind.

3. Verfahren nach Patentanspruch 1, **dadurch gekennzeichnet, dass** das von den lichtemittierenden Baugruppen (6) erzeugte Licht zwecks Erzeugung von Videosequenzen durch deren Transparenz steuerbare transparente Trägermaterialien (4) geleitet wird.

4. Verfahren nach Patentanspruch 1, **dadurch gekennzeichnet, dass** das von den lichtemittierenden Baugruppen (6) erzeugte Licht zwecks Erzeugung variabler Informationsdarstellungen durch transparente Trägermaterialien (4) geleitet wird, deren Transparenz an die für die Wiedergabe der jeweiligen Informationsdarstellungen erforderliche Transparenz gesteuert angepasst wird.

5. Vorrichtung zur optionalen Wiedergabe eines Spiegelbildes und/oder einer bildlichen Darstellung, **dadurch gekennzeichnet, dass** die das einfallende Licht aufnehmende Eintrittsfläche der Wiedergabevorrichtung (1) aus Trägermaterialien (5) gestaltet wird, die das Licht teilweise durchlassen und auf der dem einfallenden Licht zugewandten Seite spiegelnde Eigenschaften aufweisen, innerhalb der Wiedergabevorrichtung (1) den Trägermaterialien (5) Polarisationsfilter (3) nachgeordnet sind, die das zu diesen gelangende Licht teilweise absorbieren, den Polarisationsfiltern (3) transparente Trägermaterialien (4) nachgeordnet sind, die zur Aufnahme und Wiedergabe von Bilddarstellungen, Videosequenzen oder Informationen dienen sowie diesen Trägermaterialien (4) zu- und abschaltbare lichtemittierende Baugruppen (6) nachgeordnet sind, die ein Vielfaches der Lichtenergie des einfallenden Lichtes erzeugen und innerhalb der Wiedergabevorrichtung (1) zur rückwärtsgewandten Lichtführung in Richtung der Eintrittsfläche der Wiedergabevorrichtung (1) dienen.

6. Vorrichtung nach Patentanspruch 5, **dadurch gekennzeichnet, dass** den die teilweise Absorption vornehmenden Polarisationsfiltern (3), den die Bildaufnahmen, Videosequenzen und Informationen wiedergebenden Trägermaterialien (4) sowie den lichtemittierenden Baugruppen (6) eine Steuereinrichtung (8) zugeordnet ist.

7. Vorrichtung nach Patentanspruch 5, **dadurch gekennzeichnet, dass** zur optionalen Wiedergabe dreidimensionaler Darstellungen mindestens zwei die jeweiligen Teilbilder der dreidimensionalen Darstellungen wiedergebenden Trägermaterialien (5) in der Wiedergabevorrichtung (1) hintereinander angeordnet sind.

8. Vorrichtung nach den Patentansprüchen 5 und 6, **dadurch gekennzeichnet, dass** zur optionalen Wiedergabe von Videosequenzen die Trägermaterialien (5) als LED- oder LCD- Wiedergabebaugruppen (15) ausgebildet sind.

9. System zur optionalen Wiedergabe von Spiegelbildern und/oder bildlichen Darstellungen, umfassend mindestens zwei Vorrichtungen nach einem der Ansprüche 5 bis 8 und einer diesen Vorrichtungen zugeordneten Steuereinrichtung (8), mittels der die optionalen Wiedergaben der Spiegelbilder und bildlichen Darstellungen gesteuert werden.

10. System nach Anspruch 9, **dadurch gekennzeichnet, dass** die nach einem der Ansprüche 5 bis 8 ausgebildeten Vorrichtungen mit ihren jeweiligen die Spiegelbilder und bildlichen Darstellungen wiedergebenden Trägermaterialien (5) zugewandt auf gegenüberliegenden Flächen angeordnet sind und optional von der Steuereinrichtung (8) gesteuert werden.

11. System nach Anspruch 9, **dadurch gekennzeichnet, dass** die Steuereinrichtung (8) so ausgebildet ist, dass die Steuervorgänge funktechnisch von mobilen Endgeräten (14) aus durchgeführt werden können.

12. System nach Anspruch 9, **dadurch gekennzeichnet, dass** die Steuereinrichtung (8) eine Zeitschaltfunktion aufweist, mit der die lichtemittierenden Baugruppen (7) der Vorrichtungen nach einem der Ansprüche 5 bis 8 gesteuert werden.
